# EUROPEAN PATENT APPLICATION

(11) **EP 2 019 213 A2**
(43) Date of publication of application: **28.01.2009**
(21) Application number: 08013067.7
(22) Date of filing: 19.07.2008
(51) Int. Cl.: F16B 19/10

(54) **Clip**

(30) Priority: 26.07.2007 JP 2007194850
(71) Applicant: Newfrey LLC, Newark, Delaware 19711 (US)
(72) Inventor: Shibuya, Tomio, Utsunomiya-shi, Tochigi Prefecture (JP)
(74) Representative: Steil, Christian

(57) **Abstract**

A clip (1) comprises a pin (2) and a grommet (3), a leg (21) is formed by a plurality of narrow leg pieces (30), the tip portions (33) of the leg pieces have inside folded-back portions (34) that are folded back from the tips toward the inside of the leg and extend toward a flange (19), a gap is formed between the inside folded-back portions and the outside portions of the tip portions of the leg pieces, and the leg pieces are formed in narrow flexible plate shapes which extend at constant thickness from the root portion adjacent the flange to intermediate positions in the tip portions. Thereby a strong force of attachment to the member being attached to is maintained, and the pin insertion force is reduced.

## Description

### Technical Field

This invention relates to a clip comprising a pin and a grommet, and, more particularly, to such a clip, the shaft of which pin is inserted into a leg of the grommet, expanding the diameter of the grommet leg, which clip is attached to a panel or other member being attached to, by that expanded-diameter leg and a grommet flange.

### Background Technology

Plastic clips comprising a plastic pin and a plastic grommet, the shaft of which pin is inserted into the grommet, expanding the diameter of the grommet leg, which clip is attached to a panel or other member being attached to, by that expanded-diameter leg and a grommet flange, are described, for example, in JIKKAI [Unexamined Utility Model Application] No. S51-134166/1976 (Gazette) (Patent Literature 1). In JIKKAI No. S51-135268 (Gazette) (Patent Literature 2), an example of a blind rivet is described, which rivet is such that, by the insertion of a pin into a grommet-shaped main rivet body, the diameter of the leg of the main rivet body is expanded, and attachment is effected to a panel or other member being attached to by that expanded-diameter leg and the flange of the main rivet body. Such clips or blind rivets are attached to a member being attached to by the simple operation of inserting the pin into the grommet or main rivet body. With the clip of Patent Literature 1 or the blind rivet of Patent Literature 2, the pin, on the one hand, and the grommet or main rivet body, on the other, are separated. For that reason, prior to the fastening operation, time and effort are required to assemble the one part with the other part, and there is a danger of losing one part.
Patent Literature 1: JIKKAI No. S51-134166/1976 (Gazette)
Patent Literature 2: JIKKAI No. S51-135268/1976 (Gazette)
Patent Literature 3: JIKKAI No. H5-59054/1993 (Gazette)
   (corresponding to Utility Model Registration No. 2606490)

### Problems the Invention Would Solve

With the clip described in Patent Literature 3, in the as-delivered product condition, the pin is coupled to the grommet, and the grommet leg is maintained in a non-expanded condition. Accordingly, no time or effort is required for assembling the one part with the other part prior to the fastening operation, and there is no danger of losing one part.

With the clip described in Patent Literature 3, assembly time and effort is made unnecessary and the loss of the one part is prevented, but there is room for improvement in terms of lowering the force required for inserting the pin into the grommet. The rigid portion of the tip of the grommet leg in this clip is long, and the flexure distance of the leg is short, whereupon a slightly large insertion force is required of the worker during pin insertion.

An object of the present invention is to provide a clip comprising a pin and a grommet wherewith, while maintaining a large force of attachment to the member being attached to, the pin insertion force is reduced.

### Means for Solving the Problems

In order to realize the stated object, based on the present invention, a clip is provided that comprises a pin and a grommet, the shaft of which pin is inserted into a leg of the grommet, expanding the diameter of the grommet leg, which clip is attached to a panel or other member being attached to, by that expanded-diameter leg and a grommet flange; wherein the grommet leg is formed by a plurality of narrow leg pieces by a plurality of slits in the longitudinal direction, the tip portion of each leg piece has an inside folded-back portion that folds back from the tip toward the inside of the leg, folding back so as to extend toward the flange, a space is formed between that inside folded-back portion and the portion on the outside of the tip portion of the leg pieces, and each leg piece is formed in the shape of a narrow flexible plate which extends at a certain thickness from the root portion adjacent the flange to an intermediate position of the tip portion.

By the clip described above, a clip comprising a pin and grommet is obtained wherewith the pin insertion force is reduced while maintaining a large force of attachment to the member being attached to.

The configuration of the clip described above can be effected so that the tip of the inside folded-back portion of the tip portion of the leg piece latches in a permanent fastening latching channel formed in the tip of the pin shaft, and so that the permanent fastening condition with the diameter of the leg expanded is maintained. When that is the case, the length in the axial direction of the leg pieces and the length in the axial direction of the shaft can be selected to lengths wherewith, in the permanent fastening condition described above, the shaft tip and the leg tip are at substantially the same position. As a consequence, even if the length of the clip overall is made short, a small pin insertion force can be maintained while maintaining a large attachment force.

The pin and the grommet can be configured so as to be coupled in a condition wherein the diameter of the grommet leg is not expanded with the pin shaft inserted into the grommet leg. The configuration can also be made so that, by further inserting the pin shaft into the grommet leg, the tip of the inside folded-back portion of the tip portion of the leg pieces latches in the permanent fastening latching channel formed in the tip of the pin shaft, and the permanent fastening condition with the diameter of the leg expanded is maintained.

### Brief Description of Drawings

Fig. 1 is a front elevation of a clip relating to one embodiment of the present invention.
Fig. 2 is a front elevation of a pin of a clip relating to one embodiment of the present invention.
Fig. 3 is a view of the bottom surface of the pin diagrammed in Fig. 2.
Fig. 4 is a section at the A-A line of the pin diagrammed in Fig. 2.
Fig. 5 is a plan of a grommet of a clip relating to one embodiment of the present invention.
Fig. 6 is a front elevation of the grommet diagrammed in Fig. 5.
Fig. 7 is a view of the bottom surface of the grommet diagrammed in Fig. 5.
Fig. 8 is a side elevation of the grommet diagrammed in Fig. 5.
Fig. 9 is a section at the B-B line of the grommet diagrammed in Fig. 5.
Fig. 10 is a vertical section of the clip diagrammed in Fig. 1.
Fig. 11 is a diagram representing the clip diagrammed in Fig. 10 in the permanent fastening condition.
Fig. 12 is a diagram representing the clip diagrammed in Fig. 10 in the release condition.

### Preferred Embodiments

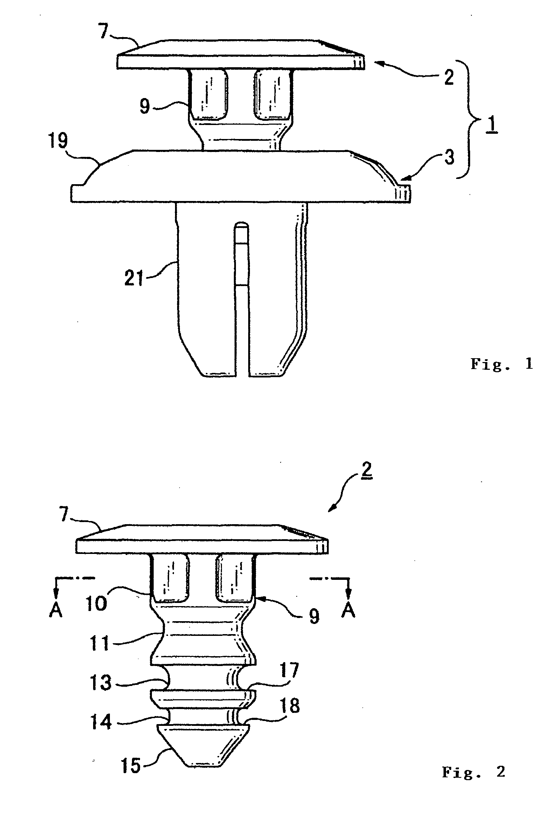

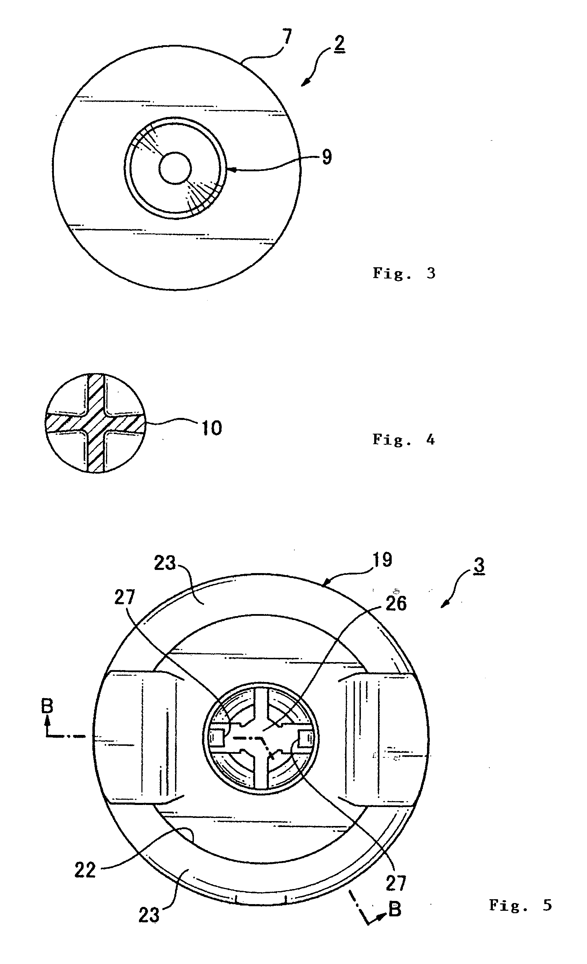

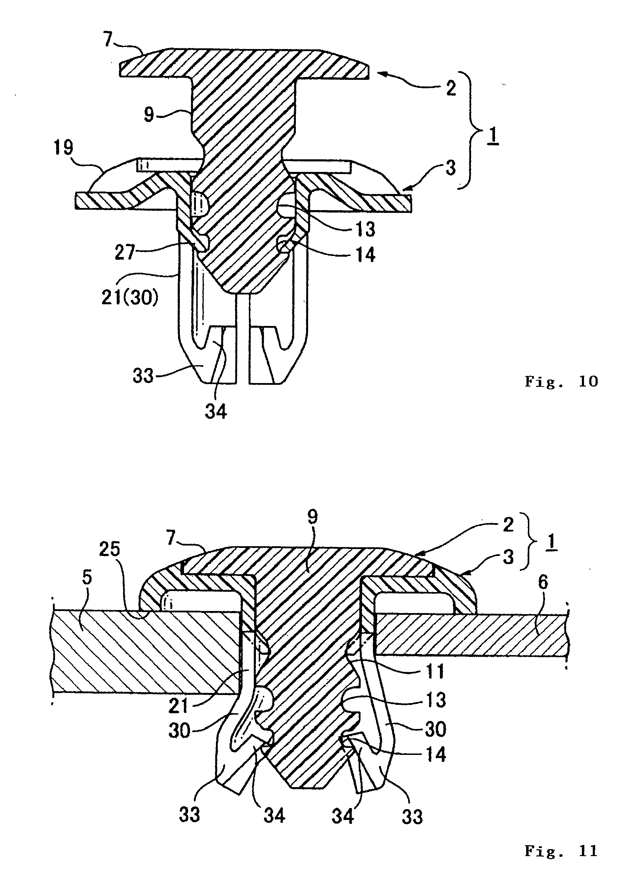

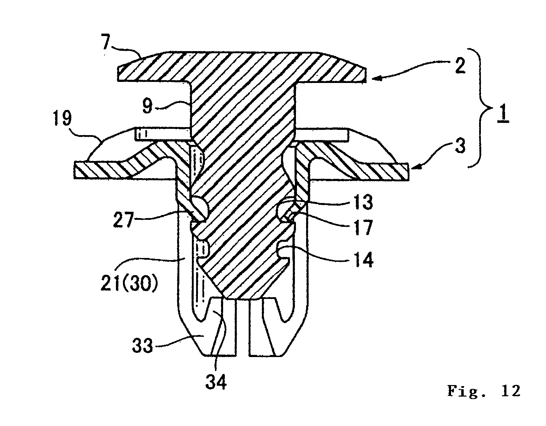

A clip relating to one embodiment of the present invention is now described with reference to the drawings. A clip 1, as diagrammed in Fig. 1, is a two-part clip comprising a pin 2 made of a hard plastic, and a grommet 3, made of plastic, to which the pin 2 is coupled. Figs. 2 to 4 represent the pin 2 by itself, while Figs. 5 to 9 represent the grommet 3 by itself. Figs. 10 to 12 represent sections of the clip 1 in various conditions wherein the pin 2 and grommet 3 are coupled. Fig. 10 represents, in greater detail, the clip 1 in the as-delivered product condition, prior to use, with the pin 2 coupled to the grommet 3, with the shaft of the pin 2 not expanding the diameter of the grommet leg. By coupling the pin 2 and the grommet 3, in addition to making the management and attachment operation of the two-part clip 1 easy, loss of one or other of the parts, that is, namely the pin 2 or the grommet 3, is prevented. Fig. 11 represents the permanent fastening condition, wherein the pin 2 has been pressed into the grommet 3 and the clip 1 permanently fastened to the members to which it is being attached. As shown in Fig. 11, a secure attachment is effected, even when the clip 1 is being attached on its left to a member 5 which is relatively thick and being attached on its right to a member 6 which is relatively thin. Fig. 12 represents the clip 1 that has been withdrawn from the member being attached to, with the pin 2 pulled out to a release condition. In this release condition also, the pin 2 is coupled to the grommet 3 with the diameter of the grommet leg not expanded, making reuse of the clip 1 possible, and preventing loss of one or other part, namely the pin 2 or the grommet 3.

The configuration of the pin 2 is now described with reference to Figs. 2 to 4. The pin 2 is an integrally molded part made of plastic and comprising a disc-shaped head 7 of large diameter, and a shaft 9 extending perpendicularly from the head 7. The head 7 is formed in a disc shape, the upper surface whereof is formed flat so that a worker can press against it with a finger or the like, but any other shape is permissible so long as it is suitable for a pushing-in operation. The shaft 9 extends perpendicularly down from the head 7 in a rod shape, and, in a permanent fastening coupling with the entirety thereof inserted into leg 21 of the grommet 3, expands the diameter of the tip end portion of the leg 21. The shaft 9, as diagrammed in Fig. 4 which represents a section at the A-A line in Fig. 2, in the root portion 10 thereof adjacent to the head 7, is formed in a rod shape having a cross-shaped section for the purpose of effecting lighter weight and saving material while maintaining adequate rigidity. The root portion 10 is not limited to the example diagrammed, and may have a round rod shape or other shape. In the shaft 9, between the root portion 10 and the tip thereof, three channels 11, 13, and 14 are formed. The tip portion 15 thereof is formed in a pointed shape to facilitate insertion into the leg of the grommet 3. Of the three channels, channel 11 is a latching pawl accepting channel that forms a space into which, when the pin 2 is in the permanent fastening condition in the grommet 3, latching pawls 27 formed on the inside of the grommet 3 can withdraw, which also prevents the latching pawls 27 from sustaining creep deformation when the permanent fastening condition continues for a long time (several months or years, for example). This latching pawl accepting channel 11 is not mandatory and, because latching with the latching pawls 27 is not necessary, is formed as a channel which has sloping surfaces with no latching shoulder. Next is the channel 13, which is a when-released latching channel that, when, in the permanent fastening condition, the pin 2 is pulled out from the grommet 3 to the release condition, prevents the pin 2 from separating from the grommet 3 with the latching pawls 27 of the grommet 3 latching. In the lower edge of this when-released latching channel 13 is formed a latching shoulder 17 for latching the latching pawls 27. The channel 14 that is between the when-released latching channel 13 and the tip portion 15 is a permanent fastening latching channel for latching the tip of the inside folded-back portion 34 of each of the leg pieces 30 of the leg 21 of the grommet 3 and maintaining the clip 1 in a condition of being permanently fastened to the member being attached to. This permanent fastening latching channel 14 is, furthermore, a latching channel into which the latching pawls 27 of the grommet 3 first latch when the shaft 9 of the pin 2 is inserted into the leg 21 of the grommet 3, and functions also as a latching channel for coupling the pin 2 and grommet 3 in the as-delivered product coupled condition of the clip 1. The lower edge of the permanent fastening latching channel 14 is formed as a second latching shoulder 18, which maintains the permanent fastening condition, and, moreover, when coupling in the as-delivered product coupled condition prior to use, causes the shaft 9 of the pin 2 to be inserted into the leg of the grommet 3 and latch with the latching pawls 27 of the grommet 3, coupling the pin 2 to the grommet 3 in the as-delivered product coupled condition prior to use.

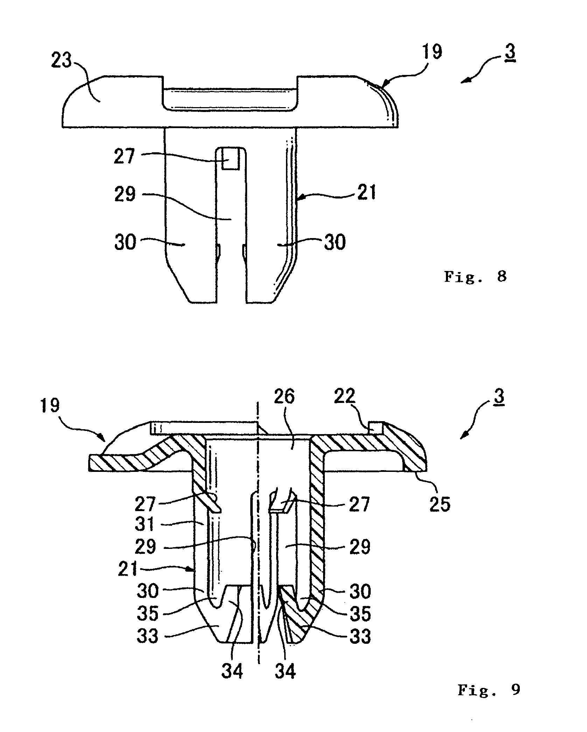

The configuration of the grommet 3 is now described with reference to Figs. 5 to 9. The grommet 3 is an integrally molded, hard plastic item comprising a flange 19 at the top and a leg 21 descending perpendicularly from the flange 19. The flange 19 is formed in a substantially circular shape, as seen in the plan view in Fig. 5, so as to make flush contact with the member 5 or 6 being attached to, such as a panel, as diagrammed in Fig. 11. At the circumferential edge of the upper surface thereof, a pair of ribs 23 is formed, whereupon a concavity 22 is formed for accepting the head 7 when the pin 2 is pushed in, and the overall strength of the flange 19 is maintained high. In the lower surface of the flange 19, a ring-shaped seat 25 is formed, along the circumferential edge, so as to make stable, flush contact with the member being attached to and maintain the attachment strength high. A hole 26 is formed in the center of the flange 19. The hole 26 in the flange 19 is continuous with a hole 26 which extends in the longitudinal direction in the center of the leg 21, allowing the shaft 9 of the pin 2 to pass through the flange 19 and be inserted into the leg 21. In the hole 26 in the flange 19 and leg 21, a pair of latching pawls 27 are formed so as to extend a short distance. The latching pawls 27, as best represented in Fig. 9, are formed so as to extend downward a short distance, from the portions of the leg 21 adjacent the flange 19 or the portions of the flange 19 at the root of the leg 21, toward the center of the hole 26. The portions on the tip ends thereof exhibit flexibility so as to be able to flex to the outside in the radial direction, and also exhibit spring elasticity for returning to their original attitude when that flexing force ceases. The latching pawls 27 latch in the permanent fastening latching channel 14 of the shaft 9 of the pin 2 and couple the pin 2 and the grommet 3 in the as-delivered product coupled condition of the clip 1. The latching pawls 27 also latch in the when-released latching channel 13 to prevent the pin 2 from separating from the grommet 3 even after the clip 1 has been pulled out from the member being attached to. Furthermore, when in the permanent fastening condition with the shaft 9 of the pin 2 pushed into the leg 21, the latching pawls 27 are accommodated in the latching pawl accepting channel 11, preventing creep deformation when the permanent fastening condition continues for a long time (several months or years, for example).

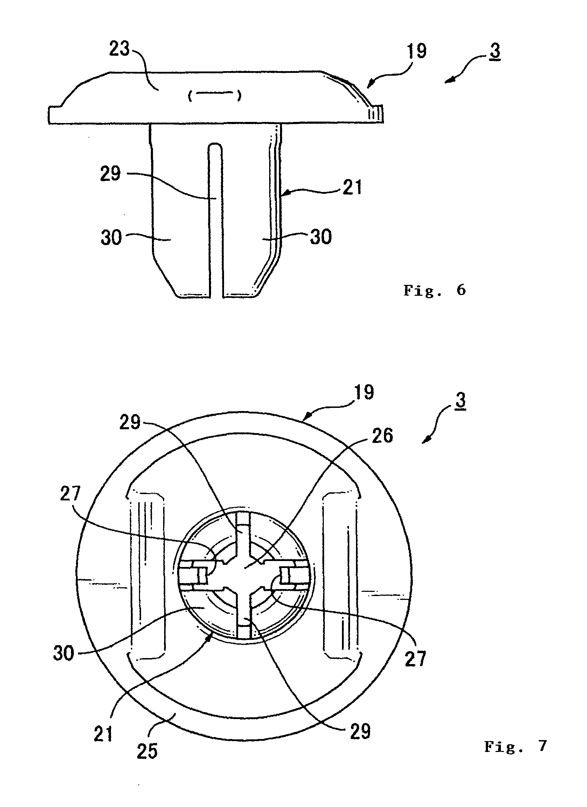

The leg 21 comprises a plurality of leg pieces 30 which, divided by a plurality of narrow slits 29, extend in the longitudinal direction from the tip at the lower end in Figs. 6, 8, and 9) toward the flange 19. In the example diagrammed, four slits 29 are formed, so that four leg pieces 30 are formed. These numbers are not limiting, and may be selected to any number, from 3 to 6 or so, for example. The leg pieces 30, as diagrammed in Fig. 9, are formed in narrow plate shapes which extend at a certain thickness from the root portions 31 adjacent the flange 19 to just before the tip portions 33. The tip portions 33 have inside folded-back portions 34 which are formed so as to extend to the tips, and then, from those tips, to fold back to the inside, folding back further so as to extend toward the flange 19. In the tip portions 33, gaps 35 are formed, between the outside portions extending to the tips and the inside folded-back portions 34. Thereby, the leg piece portions from the root portions 31 to intermediate positions in the tip portions 33 are formed in narrow plate shapes which extend at a certain thickness. Flexibility is imparted to these narrow plate-shaped portions so that long flexible portions can be obtained. In contrast therewith, the tip portions of the leg pieces of the conventional leg described in Patent Literature 3 are formed so as to be materially thick, and no gaps 35 or inside folded-back portions 34 are to be found therein. As a consequence, in the case of the conventional legs of Patent Literature 3 and the like, the portion that can flex when the leg piece springs out in the radial direction is diminished by the tip material thickness portion. The leg pieces 30 of the leg 21 can of course flex outward from the root portions 31 to the tip portions 33, but the tip portions 33, as far as the portions adjacent to the inside folded-back portions 34, can flex outwardly, in the radial direction, whereupon the flexible portions of the leg pieces 30 are longer than conventionally. As a consequence, the insertion force needed when inserting the pin shaft 9 may be smaller than conventionally needed.

The inside folded-back portions 34, furthermore, in the permanent fastening condition with the pin 2 pushed into the grommet 3, latch in the permanent fastening latching channel 14 of the shaft 9 of the pin 2 to maintain the permanent fastening condition. The inside folded-back portions 34 are at positions at which they have run in deep, from the tips of the leg pieces 30 toward the flange 19, at which positions they latch in the permanent fastening latching channel 14. As a consequence, coupling in the permanent fastening condition can be accomplished, without the tip of the shaft 9 of the pin 2 protruding, whereupon the length of the shaft 9 of the pin 2 can be formed to be substantially the same as the length of the leg 21 of the grommet 3.

As described in the foregoing, the effective flexible length of the leg pieces 30 can be made long, extending to midway along the tip portions 33, and the position at which the inside folded-back portions 34 latch with the pin shaft 9 can be made to be inside, in the axial direction, from the tip(s). Therefore, even if the entire length of the leg 21 of the grommet 3 (that is, the entire length of the grommet 3), or even the entire length of the clip 1, is made short, a coupling force can be obtained that is equal to or greater than that obtained conventionally. Also, the pin shaft 9 insertion force may be smaller than conventional insertion forces because the leg pieces 30 readily exhibit flex deformation.

Various coupling conditions for the clip 1 comprising the pin 2 and grommet 3, in the configuration described in the foregoing, are now described with reference to Figs. 10 to 12. Fig. 10 diagrams the clip 1 in the as-delivered product condition prior to use. In Fig. 10, the shaft 9 of the pin 2 is pushed part way into the hole 26 in the flange 19 and leg 21 of the grommet 3, and the latching pawls 27 of the grommet 3 are latched in the permanent fastening latching channel 14 of the shaft 9. The pin 2 is coupled to the grommet 3 with the shaft 9 of the pin 2 not expanding the diameter of the leg 21 of the grommet 3, constituting the as-delivered product coupled condition of the clip 1 prior to use. Fig. 1 diagrams the clip 1 in the same as-delivered product condition. When the clip 1 is in the as-delivered product condition, the management of and attachment operations with the clip 1 comprising the two parts, namely the pin 2 and the grommet 3, are made easy, and loss of only one part, either the pin 2 or the grommet 3, is prevented.

The clip 1 is attached to a member being attached to such as a panel (or to a plurality of panels). During the attachment operation, the leg 21 of the grommet 3 is inserted into an attachment hole in the member being attached to. Then, with the seat 25 in the lower surface of the flange 19 made flush against the member being attached to, the head 7 of the pin 2 is pushed in with a finger or the like, and the shaft 9 of the pin 2 is thoroughly pushed into the leg 21 of the grommet 3, from the condition diagrammed in Fig. 10 to that diagrammed in Fig. 11. By that pushing in, the tip of the pin shaft 9 reaches the tip of the grommet leg 21, the inside folded-back portions 34 of the tip portions 33 of the leg pieces 30 of the leg 21 are received into the permanent fastening latching channel 14, and the inside folded-back portions 34 are pushed to the outside in the radial direction. By the inside folded-back portions 34 being pushed to the outside in the radial direction, the diameter of the leg 21 comprising the plurality of flexible leg pieces 30 is expanded, the member being attached to is clamped between that expanded-diameter portion and the head 7, and the clip 1 is attached to the member being attached to. The portions of the leg pieces 30 from the root portions 31 to intermediate positions in the tip portions 33 exhibit the flexibility of a constant thickness. As a consequence, as diagrammed in Fig. 11, very strong attachment is effected, even with the thick member 5 being attached to on the left, and even with the thin member 6 being attached to on the right. That is, for the clip 1, the range of thicknesses of the member being attached to is broad. Furthermore, because the leg pieces 30 can be given a constant thickness from the root portions 31 to intermediate positions in the tip portions 33, the pin shaft 9 insertion force becomes smaller, the clip 1 attachment operation can be made easy, and the insertion force can be made small even in cases of thick members being attached to. Also, because the flexible portions of the leg pieces are long, the thickness of the leg pieces 30 can be made greater than in conventional clips, and robust attachment is effected even with thin members being attached to. The thickness of the leg pieces 30 can be made 1.6 times greater than the thickness of the flexible portions of the leg pieces described in Patent Literature 1, for example. As diagrammed in Fig. 11, moreover, the inside folded-back portions 34 latch in the permanent fastening latching channel 14 of the pin shaft 9, at positions where they run in deep, from the tips of the leg pieces 30 toward the flange 19, to maintain the permanent fastening condition. Coupling can be effected in the permanent fastening condition, without the tip of the pin shaft 9 protruding, and the length of the shaft 9 of the pin 2 can be formed so as to be substantially the same as the length of the leg 21 of the grommet 3. For that reason, the overall length of the clip 1 can be made shorter.

When the shaft 9 of the pin 2 is pushed in, the latching pawls 27 of the grommet 3 ride over the permanent fastening latching channel 14 and when-released latching channel 13 of the shaft 9 and reach the latching pawl accepting channel 11. In the permanent fastening condition, the latching pawls 27 are accommodated in the latching pawl accepting channel 11, and, when the duration of the permanent fastening condition is long (several months or years, for example), the latching pawls 27 are prevented from sustaining creep deformation.

Fig. 12 diagrams the clip 1 pulled out from the member being attached to, with the pin 2 pulled out from the grommet 3 to the release condition. Even in the release condition, the pin 2 is coupled to the grommet 3 with the diameter of the grommet leg not expanded, whereupon the clip 1 can be reused, and loss of one part, namely the pin 2 or the grommet 3, is prevented. When the pin 2 in the permanent fastening condition is pulled out from the grommet 3 to the release condition, the latching pawls 27 of the grommet 3 latch on the latching shoulder 17 of the when-released latching channel 13 in the pin shaft 9, preventing the pin 2 from separating from the grommet 3.

## Claims

1. A clip (1) comprising a pin (2) and a grommet (3), the shaft (9) of which pin (2) is inserted into a leg (21) of the grommet (3), expanding the diameter of the grommet leg (21), which clip (1) is attached to a panel or other member (5; 6) being attached to, by that expanded-diameter leg (21) and a grommet flange (19); wherein:
the grommet leg (21) is formed by a plurality of narrow leg pieces (30) by a plurality of slits (29) in the longitudinal direction; the tip portion (33) of each leg piece (30) has an inside folded-back portion (34) that folds back from the tip toward the inside of the leg (21), folding back so as to extend toward said flange (19); a space (35) is formed between that inside folded-back portion (34) and the portion on the outside of the tip portion (33) of said leg pieces (30); and each leg piece (30) is formed in the shape of a narrow flexible plate which extends at a certain thickness from a root portion (31) adjacent said flange (19) to an intermediate position of said tip portion (33).

2. The clip of claim 1, wherein the tip of said inside folded-back portion (34) of the tip portion (33) of said leg pieces (30) latches in a permanent fastening latching channel (14) formed in said pin shaft tip (15), maintaining said leg (21) in an expanded-diameter permanent fastening condition.

3. The clip of claim 2, wherein the length in the axial direction of said leg pieces (30) and the length in the axial direction of said shaft (9) are selected to lengths wherewith, in said permanent fastening condition, said shaft tip (15) and said leg tip are substantially in the same position.

4. The clip of any one of claims 1 to 3, wherein said pin (2) and said grommet (3) are configured such that they are coupled in a condition wherein the diameter of the grommet leg (21) is not expanded with the pin shaft (9) inserted in the grommet leg (21).

5. The clip of claim 4, wherein, by the insertion of said pin shaft (9) into said grommet leg (21), the tip of said inside folded-back portion (34) of the tip portion (33) of said leg pieces (30) latches in a permanent fastening latching channel (14) formed in said pin shaft tip (15), configured such that said leg (21) is maintained in an expanded-diameter permanent fastening condition.
